Europäisches Patentamt

**European Patent Office**

Office européen des brevets

(19)

(11) Veröffentlichungsnummer: **0 054 848**
B1

(12)

# EUROPÄISCHE PATENTSCHRIFT

(45) Veröffentlichungstag der Patentschrift:
12.12.84

(51) Int. Cl.³: **G 03 B 27/73**

(21) Anmeldenummer: 81110306.8

(22) Anmeldetag: 10.12.81

(54) Verfahren und Vorrichtung zum Belichten von Aufzeichnungsmaterial bei der Herstellung photographischer Farbkopien.

(30) Priorität: **19.12.80 CH 9381/80**

(43) Veröffentlichungstag der Anmeldung:
30.06.82 Patentblatt 82/26

(45) Bekanntmachung des Hinweises auf die Patenterteilung:
12.12.84 Patentblatt 84/50

(84) Benannte Vertragsstaaten:
AT BE DE FR GB IT NL

(56) Entgegenhaltungen:
FR - A - 2 303 432
US - A - 2 981 791
US - A - 3 351 707
US - A - 3 417 196
US - A - 3 441 663
US - A - 4 097 892

(73) Patentinhaber: Fotomec - San Marco S.p.A., Via Plandipan, I-33080 Fiume Veneto/Pordenone (IT)

(72) Erfinder: Grossmann, Walter, Dr., Wettsteinstrasse 59, CH-8332 Russikon (CH)

(74) Vertreter: Patentanwaltsbureau Scheidegger, Zwicky & Co., Stampfenbachstrasse 48 Postfach, CH-8023 Zürich (CH)

## Beschreibung

Die Erfindung betrifft ein Verfahren zum Belichten von für Grundfarben sensibilisiertem photographischem Farb-Aufzeichnungsmaterial bei der Herstellung von Farbkopien photographischer Farbaufnahmen, wobei für jede zu kopierende Farbaufnahme automatisch aus den durch Messung ermittelten Farbdichtewerten optischer Grundfarbenauszüge der Farbaufnahme und aus zum Kopieren einer Eich-Farbaufnahme auf das Aufzeichnungsmaterial vorgegebenen Bezugs-Belichtungswerten Kopier-Belichtungswerte zum Einstellen einer steuerbaren Belichtungseinrichtung errechnet werden, sowie eine Vorrichtung zur Ausführung des Verfahrens.

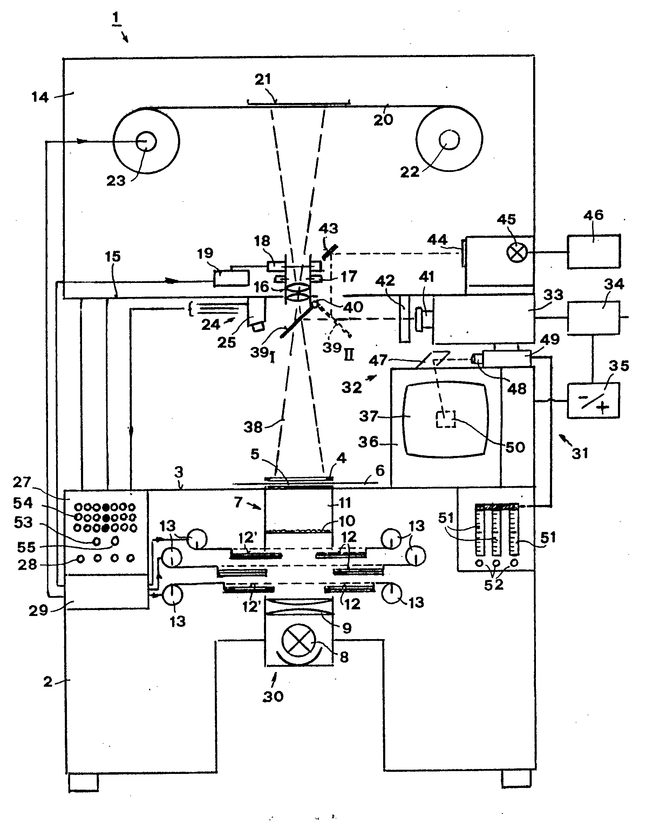

Bei der Verarbeitung von photographischen Amateuraufnahmen ist es üblich, die Negative zur Steuerung des Kopiervorganges auf ihre Farbdichten auszumessen, was entweder integral, d. h. durch Messung der Durchlässigkeit der gesamten Negativfläche in drei Spektralbereichen, oder auch punktweise durch Abtastung der Negativfläche in einem sogenannten Scanning-Verfahren, vorgenommen werden kann. Die Resultate dieser Messungen werden in Rechenschaltungen analog oder digital verarbeitet, um Dauer und/oder Intensität der drei Belichtungen in den Spektralbereichen Rot, Grün und Blau zu bestimmen. Obwohl solche Belichtungsautomaten, sogenannte Printer, sehr gute Ergebnisse liefern und der Ausschuß bei der Verarbeitung von Amateuraufnahmen klein ist, wird für Aufnahmen, bei denen es besonders auf die Qualität ankommt, insbesondere bei Portraitaufnahmen, anderen Aufnahmen von Fachphotographen und bei großformatigen Amateurbildern, statt der automatischen Korrektur auch ein Verfahren der visuellen Kontrolle über ein auf elektronischem Weg erzeugtes Fernsehbild benutzt. Das Farbnegativ wird dabei mit farbfernsehtechnischen Mitteln in ein Positiv umgesetzt, das auf einem Bildschirm betrachtet und beurteilt werden kann. Helligkeit und Farbe des Fernsehbildes sind mit geeichten Einstellmitteln veränderbar, und die Stellung dieser Mittel bei einem als gut beurteilten Bild auf dem Bildschirm kann zur Steuerung der Belichtung herangezogen werden. Die Abbildung auf dem Fernseh-Bildschirm ersetzt eine Probekopie, mit dem Vorteil, daß das Resultat jeder Einstellung sofort sichtbar wird und nicht erst ein zeitaufwendiger Entwicklungsvorgang durchgeführt werden muß. Eine Einrichtung zur farbfernsehtechnischen Simulierung des Negativ-Positiv-Kopierprozesses ist z. B. in der deutschen Offenlegungsschrift 27 44 847 beschrieben, wobei aber keine direkte Steuerung der Belichtung im Printer erfolgt; hier, wie auch in der US-PS 2 981 791 erfolgt ausschließlich eine visuell kontrollierte Steuerung.

Obwohl dieses Video-Beurteilungsverfahren mit großem Erfolg in vielen Laboratorien angewendet wird, ist es nicht ohne Nachteile. Die Beurteilung ist ganz von der Bedienungsperson abhängig, die bei der Arbeit schnell ermüdet und dann Fehleinstellungen vornehmen kann. Außerdem ist die Einstellung der richtigen Helligkeit und Farbbalance langsam, vor allem wenn die Negative große Unterschiede aufweisen. Eine Leistung von ungefähr 100 beurteilten Negativen pro Stunde ist schon als sehr gut zu bezeichnen, während ein vollautomatischer Hochleistungsprinter 10 000 Negative pro Stunde ausmessen und kopieren kann.

Es war Aufgabe der Erfindung, ein Verfahren und eine Vorrichtung zum Belichten von Aufzeichnungsmaterial bei der automatischen Herstellung von Farbkopien photographischer Farbaufnahmen, insbesondere Amateuraufnahmen, anzugeben, die für kritische Vorlagen, d. h. Vorlagen, deren Kopien höheren Qualitätsanforderungen genügen müssen, ein Kopieren praktisch ohne Ausschuß gewährleisten.

Die erfindungsgemäße Lösung der Aufgabe besteht in dem in Anspruch 1 gekennzeichneten Belichtungsverfahren und in der im unabhängigen Anspruch 5 gekennzeichneten Vorrichtung zur Ausführung des Verfahrens.

Die mit der Erfindung erzielten Vorteile sind im wesentlichen darin zu sehen, daß von jeder der nacheinander für die Belichtung von Aufzeichnungsmaterial ausgeleuchteten Farbaufnahmen zuerst ein Farbfernsehbild erzeugt wird, das genauso aussieht, wie die mit errechneten Belichtungswerten automatisch belichtete Farbkopie nach dem Entwickeln aussehen würde. Die Bedienungsperson kann sich so auf eine Überwachung der nacheinander auf dem Bildschirm erscheinenden Farbfernsehbilder beschränken und braucht nur in denjenigen Fällen einzuschreiten und die Belichtungswerte zu korrigieren, in denen die automatische Belichtungseinrichtung ein schlechtes Ergebnis geliefert hätte. Sie führt damit diejenige Arbeit aus, die sonst bei einem automatisch messenden Printer nach dem Entwickeln des belichteten Aufzeichnungsmaterials von einer Kontrollperson an einem Rollenkontrollpult vorgenommen wird, nämlich das Erkennen qualitativ ungenügender Kopien und die Festlegung von Korrekturen für die Belichtung zur Erzielung einer verbesserten Kopie. Im Gegensatz dazu wird hier aber die Kontrolle vor der Auslösung der Belichtung gemacht, und die Wirkung jeder Korrektur läßt sich unmittelbar am Bildschirm beurteilen.

Vorteilhafte Ausbildungen der Erfindung sind in den abhängigen Ansprüchen angegeben.

Im folgenden wird die Erfindung anhand eines Ausführungsbeispieles unter Bezugnahme auf die beiliegende Zeichnung ausführlicher erläutert. Die einzige Figur der Zeichnung zeigt in schematischer Darstellung den Aufbau einer bevorzugten Vorrichtung zur Ausführung des Belichtungsverfahrens nach der Erfindung.

Die auf der Zeichnung dargestellte und insgesamt mit 1 bezeichnete Vorrichtung zum automatischen Belichten von Aufzeichnungsmaterial nach dem Belichtungsverfahren der Erfindung ist im wesentlichen wie ein herkömmlicher Belichtungsautomat, ein sogenannter Printer, aufgebaut und weist ein Arbeitspult 2 auf, auf dessen Tischplatte 3 ein horizontales Kopierfenster 4 zum Einlegen der zu kopierenden photographischen Farbaufnahme 5, z. B. eines Negativfilms 6, angeordnet ist. Zum Ausleuchten des Kopierfensters 4 enthält das Arbeitspult 2 eine Beleuchtungseinrichtung 7 mit einer stabilisierten Kopierlampe als Lichtquelle 8, einem Kondensator 9 und einer Streuscheibe 10, die zusammen im sogenannten Lampenhaus 11 untergebracht sind. In dem durch die Streuscheibe 10 das Kopierfenster 4 gleichmäßig ausleuchtenden Licht können die relativen Intensitäten der drei Hauptspektralbereiche, auf die die drei Schichten des photographischen Farbaufzeichnungsmaterials empfindlich sind, durch zwei oder drei Farbfilter 12 oder Farbfilterpaare 12, 12' verändert werden, die von Stellmotoren 13 mehr oder weniger weit in den Strahlengang im Lampenhaus 11 eingeschoben werden können.

Das Arbeitspult 2 trägt einen lichtdichten Kasten 14, auf dessen Unterseite 15 zur Abbildung der zu kopierenden Farbaufnahme 5 im Kopierfenster 4 auf das photographische Farb-Aufzeichnungsmaterial 20 ein Objektiv 16 mit oder ohne verstellbarer Blende 17 und mit einem z. B. von einem Drehmagneten 19 betätigten, durch elektrische Steuersignale gesteuerten Verschluß 18 angeordnet ist. Im Kasten 14 ist das Farb-Aufzeichnungsmaterial 20, wie insbesondere Kopierpapier, auf einer Belichtungsbühne 21 geführt und wird bei der Herstellung von Serienkopien von einer Vorratsrolle 22 ab- und nach dem Belichten auf eine Aufnahmerolle 23 aufgewickelt.

Diese Anordnung, soweit vorstehend im wesentlichen beschrieben, entspricht im Aufbau einem klassischen photographischen Printer mit visueller Beurteilung der zu kopierenden Farbaufnahmen.

Im weiteren ist eine photoelektrische Meßeinrichtung 24 vorhanden, die dazu dient, die integrale Durchlässigkeit der Farbaufnahmen 5 des Negativfilms 6 in den Hauptspektralbereichen Rot, Grün und Blau zu bestimmen. Die photoelektrische Meßeinrichtung 24, die von beliebiger Art sein kann, weist im gezeigten Ausführungsbeispiel, wie meist üblich, für die einzelnen Grundfarben oder Hauptspektralbereiche empfindliche photoelektrische Meßwertgeber 25 auf, die rings um das Objektiv 16 herum angeordnet und auf das Kopierfenster 4 ausgerichtet sind. Von diesen photoelektrischen Meßwertgebern 25, von denen auf der Zeichnung der Übersichtlichkeit wegen nur einer dargestellt ist, enthält jeder z. B. ein Photoelement mit vorgeschaltetem Farbfilter für den betreffenden Hauptspektralbereich. Bei im Kopierfenster 4 ausgeleuchteter Farbaufnahme 5 gibt jeder photoelektrische Meßwertgeber 25 ein elektrisches Signal für den im betreffenden Hauptspektralbereich aus der Farbaufnahme 5 austretenden Lichtstrom $\Phi_R$, $\Phi_G$, $\Phi_B$ ab, aus dem bei bekanntem eintretenden Lichtstrom $\Phi_0$ (Messung ohne Farbaufnahme) die Durchlässigkeit $\Phi_R/\Phi_0$, $\Phi_G/\Phi_0$, $\Phi_B/\Phi_0$ der Farbaufnahme 5 im Hauptspektralbereich und daraus die unter bestimmten Voraussetzungen dem dekadischen Logarithmus des Kehrwertes der Durchlässigkeit proportionale Dichte $D_R$, $D_G$, $D_B$ im Hauptspektralbereich, d. h. die Grundfarbendichte, bestimmt werden kann.

Die Bestimmung der Belichtungswerte erfolgt mit Bezug auf eine Eich-Farbaufnahme (Eich- oder Standard-Negativ), für die in den Hauptspektralbereichen die drei Teilbelichtungen $K_R$, $K_G$, $K_B$ zur Herstellung einer guten Farbkopie auf dem jeweiligen photographischen Farb-Aufzeichnungsmaterial 20 bekannt sind. Die in das Kopierfenster 4 eingelegte Eich-Farbaufnahme ergibt über die photoelektrische Meßeinrichtung 24 für die Hauptspektralbereiche Bezugsdichten $D_{R0}$, $D_{G0}$, $D_{B0}$, von denen die entsprechenden Dichten der zu kopierenden Farbaufnahme 5 mehr oder weniger abweichen. Diese Dichtedifferenzen $\Delta D_R = D_{R0}-D_R$, $\Delta D_G = D_{G0}-D_G$, $\Delta D_B = D_{B0}-D_B$ sind leicht zu bestimmen, da bei konstanten Meßbedingungen für die Bezugsdichten die Eich-Farbaufnahme nur einmal gemessen werden braucht und aus den Meßsignalen abgeleitete Bezugs-Dichtewerte als Konstanten gespeichert werden können.

Aus den für jede zu kopierende Farbaufnahme 5 über die Signale der photoelektrischen Meßeinrichtung 24 erhaltenen Meßwerten für $\Phi_R$, $\Phi_G$, $\Phi_B$ können die drei Teilbelichtungen $E_R$, $E_G$, $E_B$ für rotes, grünes und blaues Licht bestimmt werden, z. B. durch die folgenden Gleichungen

$$\log E_R = K_R + a_{11}\Delta D_R + a_{12}\Delta D_G + a_{13}\Delta D_B$$
$$\log E_G = K_G + a_{21}\Delta D_R + a_{22}\Delta D_G + a_{23}\Delta D_B \qquad 1)$$
$$\log E_B = K_B + a_{31}\Delta D_R + a_{32}\Delta D_G + a_{33}\Delta D_B,$$

in welchen $\Delta D_R$, $\Delta D_G$, $\Delta D_B$ die vorstehend genannten Dichtedifferenzen, $K_R$, $K_G$, $K_B$ die drei Bezugs-Teilbelichtungen und $a_{11}$ bis $a_{33}$ Koeffizienten sind.

Von den neun Koeffizienten $a_{11}$ bis $a_{33}$ sind die drei diagonal angeordneten Koeffizienten $a_{11}$, $a_{22}$, $a_{33}$ am wichtigsten, sie sollten bei Vollkorrektur angenähert 1 sein, während die sechs weiteren Koeffizienten dann sehr klein ($a < 0,1$) sind. Bei konstanter Beleuchtungsstärke können die drei Belichtungen $E_R$, $E_G$, $E_B$ in Belichtungszeiten umgerechnet werden.

Die auf dem Aufzeichnungsmaterial 20 durch Belichten erzielten Grundfarbendichten, d. h. die Dichten der optischen Grundfarbauszüge der abgebildeten Farbaufnahme 5, sind von der Belichtungszeit und der Beleuchtungsstärke abhängig. Das beschriebene Verfahren benützt für die allgemeine Dichte, die Helligkeit der Kopie, die Steuerung der Belichtungszeit und für die Anpassung der Farbbalance die Steuerung der Beleuchtungsstärke durch mehr oder weniger weites Einschieben der selektiv absorbierenden Farbfilter 12 bzw. Farbfilterpaare 12, 12' in das Lampenhaus 11. Zur Bestimmung der Kopier-Belichtungszeit werden dabei in einer ersten Phase die drei Teil-Belichtungszeiten für die einzelnen Grundfarben berechnet, von denen die längste die Kopier-Belichtungszeit ergibt. Die beiden kürzeren Teilbelichtungszeiten werden durch Einschieben komplementärfarbiger Filter 12 oder Filterpaare 12, 12' (im allgemeinen Interferenzfilter) mittels der Stellmotoren 13 auf die längste der errechneten Teil-Belichtungszeiten verlängert. Gegebenenfalls kann eine nochmalige geringfügige Verlängerung der Kopier-Belichtungszeit zur Kompensation von Nebenabsorptionen der eingeschobenen Filter vorgenommen werden.

Das Arbeitspult 2 enthält einen Rechner 27, dem die Meßwertsignale der photoelektrischen Meßeinrichtung 24 zugeführt sind und dem z. B. mittels Tasten eines Tastenfeldes 28 die Bezugs-Belichtungswerte für das jeweils verwendete Farb-Aufzeichnungsmaterial 20 eingegeben werden können. Die Bezugsdichten der Eich-Farbaufnahme sind dabei zweckmäßig in einem Speicher gespeichert und können nach Betätigung von Tasten des Tastenfeldes 28 bei eingelegter Eich-Farbaufnahme kontrolliert und gegebenenfalls korrigiert werden. Aus den erhaltenen Daten errechnet der Rechner 27 die beim Kopieren der jeweiligen Farbaufnahme 5 erforderlichen Einstellungen der Farbfilter 12, 12' für die Farbbalance sowie die Kopier-Belichtungszeit, und eine an den Rechner 27 angeschlossene Steuereinrichtung 29 stellt nach Maßgabe der errechneten Kopier-Belichtungswerte über die Stellmotoren 13 die genannten Filter 12, 12' in die richtige Einschubstellung, löst den Verschluß 19 für die errechnete Belichtungszeit aus und bewirkt nach erfolgter Belichtung des Aufzeichnungsmaterials 20 dessen Vorschub um eine Bildlänge.

Dieser bisher beschriebene Teil der Vorrichtung nach der Erfindung, der im folgenden als automatische Belichtungseinrichtung 30 (kurz Belichtungseinrichtung 30) bezeichnet wird, entspricht im Aufbau und in der Betriebsweise einem Belichtungsautomaten des neuesten technischen Standes, so daß sich ein Eingehen auf weitere Einzelheiten erübrigt, die im Bedarfsfalle diesbezüglichen Veröffentlichungen, wie insbesondere der Herstellerfirmen solcher messenden Printer, entnommen werden können.

Erfindungsgemäß ist diese automatische Belichtungseinrichtung 30 ergänzt durch eine Kontrolleinrichtung 31 für die visuelle Beurteilung der zu erwartenden Farbkopie, die im folgenden ausführlicher beschrieben wird.

Die Kontrolleinrichtung 31 umfaßt im wesentlichen eine Farbfernseheinrichtung 32 mit Farbfernsehkamera 33, Steuergerät 34, Umkehreinrichtung 35 zur Umkehr des aufgenommenen Negativbildes in ein Positivbild und Monitor 36.

Der Monitor 36 ist auf dem Arbeitspult 2 so angeordnet, daß sein Bildschirm 37 vom Bedienenden bequem betrachtet werden kann, und die Farbfernsehkamera 33 befindet sich in einer Stellung, in der z. B. über einen oberhalb des Kopierfensters 4 angeordneten Spiegel 39 vom ausgeleuchteten Kopierfenster 4 ausgehende Lichtstrahlen 38 für eine Abbildung der darin befindlichen Farbaufnahme 5 auf die bildaufnehmende Sensorfläche der Farbfernsehkamera 33 fallen.

Im gezeigten Ausführungsbeispiel ist der Spiegel 39 z. B. um eine horizontale Drehachse 40 in zwei Endstellungen schwenkbar angeordnet, wobei er in der einen Endstellung $39_I$, die auf der Zeichnung stark ausgezogen ist, die sonst vom Objektiv 16 aufgenommenen Lichtstrahlen 38 zur Farbfernsehkamera 33 hin umlenkt und in der zweiten Endstellung $39_{II}$, die auf der Zeichnung mit strichlierten Linien dargestellt ist, aus diesen Lichtstrahlen 38 herausgeklappt ist, so daß diese ungehindert zum Objektiv 16 gelangen können. Dieses Umklappen des Spiegels 39 erfolgt automatisch mittels einer entsprechenden Antriebsvorrichtung, wie z. B. mit einem Elektromagneten (nicht dargestellt), der von der Steuereinrichtung 29 so gesteuert wird, daß sich der Spiegel während des Belichtens des Aufzeichnungsmaterials 20 bei geöffnetem Verschluß 18 in der aus den Lichtstrahlen 38 herausgeklappten zweiten Endstellung $39_{II}$ und nur bei geschlossenem Verschluß 18 in der ersten Endstellung $39_I$ für die Erzeugung des Farbfernsehbildes der zu kopierenden Farbaufnahme 5 befindet. Statt eines solchen Klapp-Spiegels 39 kann auch ein verschiebbarer Spiegel oder auch ein Spiegelrad mit mehreren Umlenkspiegeln vorgesehen sein. Ferner kann auch ein fest angeordneter teildurchlässiger Spiegel verwendet werden, für den sich dann eine separate Steuerung erübrigt, der aber eine entsprechende Verlängerung der Belichtungszeit und gegebenenfalls Korrekturen in der Farbbalance bei der Ausleuchtung der Farbaufnahme 5 erforderlich macht. Zum Abbilden der Farbaufnahme 5 auf der Sensorfläche der Farbfernsehkamera 33 wird mit Vorteil ein Zoomobjektiv 41 benutzt, das auf das Kopierfenster 4 fokussiert ist und das die Bildvergrößerungsmöglichkeiten des Objektivs 16 für die Abbildung auf dem Farb-Aufzeichnungsmaterial 20 mitmachen kann, was beispielsweise durch eine geeignete mechanische Kupplung (auf der Zeichnung nicht dargestellt), wie durch zwei von einem Mikroprozessor gesteuerte Stellmotoren geschieht, so daß auf dem Monitor-Bildschirm 37 immer derjenige Bildausschnitt sichtbar wird, der auch auf dem Aufzeichnungsmaterial 20 abgebildet wird. Eine solche Anordnung erlaubt besonders bei einer optischen Abbildungseinrichtung für stufenlos veränderbare Vergrößerung auf dem Aufzeichnungsmaterial 20 eine ideale visuelle Beurteilung und Kontrolle des Resultates der Bildeinstellung.

Die Farbfernsehkamera 33, die vorzugsweise eine auch für andere Zwecke eingesetzte kommerzielle Kamera sein soll, muß eine gute Farbwiedergabe bei hoher Stabilität gewährleisten. Welches System in Anwendung kommt — Einröhrenkamera mit Streifenfilter, Dreiröhrenkamera oder als Kompromiß die Zweiröhrenkamera — ist für diesen Anwendungsfall nicht wesentlich. An die Geometrie

4

der Abbildung werden keine hohen Anforderungen gestellt. Wichtig ist, daß in der Kette: Farbfernsehkamera 33 — Steuergerät 34 — Monitor 36 eine Umkehrung des Bildes vom Negativ zum Positiv stattfindet, daß die Abbildung so erfolgt, daß der Kontrast genau wie beim Kopierprozeß Negativ-Aufzeichnungsmaterial relativ stark angehoben wird (das übliche Farbkopierpapier hat einen Gammawert von etwa 2,5) und daß die drei Farbempfindlichkeiten der Farbfernsehkamera 33 in etwa den Hauptabsorptionsgebieten des Farb-Aufzeichnungsmaterials 20 entsprechen. Weitere Einzelheiten der Farbfernseheinrichtung 32 brauchen hier nicht näher beschrieben zu werden, da sie zum Stand der Farbfernsehtechnik gehören.

Damit die Farbfernseheinrichtung 32 als Meßsystem für die Bildeinstellung und Bildkorrektur dienen kann, muß ihre Stabilität überprüfbar sein. Im gezeigten Ausführungsbeispiel wird deshalb bei aus den Lichtstrahlen 38 herausgeklapptem Spiegel 39, dessen Rückseite nun ebenfalls spiegelnd ist, über einen Umlenkspiegel 43 ein Testbild 44 auf der Sensorfläche der Farbfernsehkamera 33 abgebildet, das z. B. aus einem Farbnegativbild besteht, welches Graufelder und eventuell auch zusätzliche Farbfelder enthält. In den Betriebspausen der Vorrichtung und auch während den aufeinanderfolgenden Belichtungen des Aufzeichnungsmaterials 20 wird immer wieder dieses Testbild 44 auf dem Monitor-Bildschirm 37 sichtbar. Die Ausleuchtung des Testbildes 44 muß so stabil sein, daß keine Unsicherheiten in der Beurteilung des von ihm erzeugten Fernsehbildes auftreten können. Zum Ausleuchten des Testbildes 44 wird daher zweckmäßig eine an eine stabilisierte Stromversorgung 46 angeschlossene Lichtquelle 45 verwendet. Die Lichtquelle 45 kann aber auch mittels einer Photozellenanordnung mit Rückkopplungskreis überwacht und geregelt werden.

Am Monitor 36 kann so am immer wieder sichtbar werdenden Testbild die Stabilität der Farbfernseheinrichtung 32 visuell subjektiv kontrolliert werden. Vorzugsweise ist aber noch eine Meßvorrichtung vorgesehen, die eine objektive visuelle Überprüfung der Stabilität gestattet. Hierzu wird im gezeigten Ausführungsbeispiel über einen Umlenkspiegel 47 und ein Objektiv 48 ein zentrales Graufeld 50 des Monitor-Bildschirms 37 auf eine zweite photoelektrische Meßeinrichtung 49 abgebildet, die mindestens drei, im roten, grünen und blauen Spektralbereich empfindliche photoelektrische Meßwertgeber enthält. Drei nebeneinander angeordnete und an der zweiten photoelektrischen Meßeinrichtung 49 angeschlossene Meßinstrumente 51 mit drei von Hand an Drehknöpfen 52 verstellbaren Kalibrierpotentiometern erlauben auf einen Blick die Kontrolle der Grauabstimmung. Die drei Zeiger der sogenannten Profilinstrumente müssen bei korrekter Abstimmung alle auf der gemeinsamen Nullinie sein. Selbstverständlich sind auch andere Anzeigen möglich, z. B. mit Photodioden, die die Nullage bzw. die Abweichungen von der Nullage anzeigen; doch ist in der Praxis die Einstellung mit Hilfe von analog anzeigenden Instrumenten am einfachsten.

Statt einer visuellen Überprüfung kann auch über eine elektrische Kontrolleinrichtung die Graubalance der Farbfernseheinrichtung 32 automatisch nachgeführt werden, indem die zweite photoelektrische Meßeinrichtung 49 mit dem Steuerteil des Monitors 36 verbunden wird und durch das Meßsignal der Meßeinrichtung die Grauabstimmung so lange verändert wird, bis wieder der Sollwert erreicht ist.

Im Unterschied zur Beeinflussung der Farbdichten auf dem Farb-Aufzeichnungsmaterial 20 spielt bei der Beeinflussung der drei Grundfarbenintensitäten auf dem Monitor-Bildschirm 37 der Farbfernseheinrichtung 32 die Belichtungszeit keine Rolle. Das Resultat muß vielmehr durch Steuerung der Beleuchtungsstärke der Abbildung auf der Sensorfläche der Farbfernsehkamera 33 erreicht werden, z. B. mittels Lichtschwächungsfilter, einer Irisblende oder durch Veränderung der Intensität der Lichtquelle 8 oder durch elektrische Steuerung der Amplituden von Helligkeitssignalen in der Abbildungskette: Farbfernsehkamera 33 — Verstärker — Monitor 36. Es wird zwar möglich sein, für eine bestimmte Negativ-Farbaufnahme das Resultat auf dem Aufzeichnungsmaterial 20 mit dem auf dem Monitor-Bildschirm 37 erscheinenden Bildeindruck einigermaßen in Übereinstimmung zu bringen, jedoch wird bei der Einführung einer davon abweichenden Negativ-Farbaufnahme, insbesondere einer weniger stark oder einer stärker belichteten Farbaufnahme, die Übereinstimmung im allgemeinen nicht ohne weiteres erreichbar sein. Dieses »Auseinanderlaufen« der Ergebnisse der Abstimmungen der Farbfernsehkamera 33 auf besten Bildeindruck und der Kopiererfordernisse für bestes Bildresultat auf dem Aufzeichnungsmaterial 20 ist aus der Printertechnik bekannt, da auch dort die Meßresultate der Dichtemessung und die erforderlichen Belichtungszeiten durch eine Korrekturfunktion, die sogenannte »Slope-Korrektur«, verknüpft werden müssen, um zu besseren Bildergebnissen bei stärker abweichenden Grundfarbdichten der zu kopierenden Farbaufnahme zu kommen. Wichtige Faktoren, die diese Korrektur nötig machen, sind unter anderem: das Reziprozitätsverhalten der Aufzeichnungsmaterial-Emulsion (Schwarzschild-Effekt), eine Bevorzugung der Schattenpartien des Bildmotivs bei der Integralmessung, während im Bild die hellen Lichter für die Beurteilung wichtiger sind, variabler Kontrast des Negativmaterials bei verschiedenen Belichtungsstufen, Nicht-Übereinstimmung der Farbempfindlichkeiten der Schichten des Aufzeichnungsmaterials mit dem Empfindlichkeitsverlauf der photoelektrischen Meßwertgeber und verschiedene Nichtlinearitäten im System. Diese Faktoren sind so zahlreich und in ihrer Wirkung schwer auseinanderzuhalten, so daß in der Praxis die Slope-Korrektur immer empirisch bestimmt wird.

In der Vorrichtung nach der Erfindung wird zweimal Übereinstimmung des Gleichlaufs verlangt, einmal zwischen der Messung der Grundfarbdichten der zu kopierenden Farbaufnahme 5 und dem zu erwartenden Kopierresultat auf dem Aufzeichnungsmaterial 20 und das zweite Mal zwischen der Abbildung der Farbaufnahme auf dem Monitor-Bildschirm 37 und dem Kopierresultat auf dem Aufzeichnungsmaterial. Es ist selbstverständlich, daß damit die erforderliche dritte Übereinstimmung, nämlich zwischen den gemessenen Grundfarbendichten der zu kopierenden Farbaufnahme 5 und der Erzeugung des Farbfernsehbildes auf dem Monitor-Bildschirm 37, ebenfalls erreicht wird.

In der Praxis werden die Meßergebnisse z. B. nach den Gleichungen 1) ausgewertet und in Belichtungszeiten und Beleuchtungsstärken bzw. Filtereinstellungen im Lampenhaus 11 umgerechnet, wobei die Bezugs-Belichtungswerte $K_R$, $K_G$, $K_B$ als sogenannte Eichwerte in den Rechner eingegeben werden. Die Slope-Korrektur wird dabei durch Eingabe der Summenwerte $S_R$, $S_G$ und $S_B$ vorgenommen, wobei

$$\begin{aligned}
S_R &= a_{11} + a_{12} + a_{13} \\
S_G &= a_{21} + a_{22} + a_{23} \\
S_B &= a_{31} + a_{32} + a_{33}
\end{aligned} \qquad 2)$$

ist.

Diese Summenwerte $S_R$, $S_G$, $S_B$ sind vorzugsweise doppelt vorhanden, damit für überbelichtete und unterbelichtete Farbaufnahmen verschiedene Werte zur Anwendung kommen können.

Um die Übereinstimmung des Farbfernsehbildes mit dem zu erwartenden Kopierresultat zu erreichen, wird der gleiche Gleichungssatz 1) für die Berechnung der Einstellung der Filter 12, 12′ im Lampenhaus 11 verwendet, allerdings mit einem anderen Satz von Koeffizienten $a_{11}$ bis $a_{33}$. Statt einer Gesamtbelichtungszeit wird eine Gesamtbelichtungsintensität ausgerechnet und damit z. B. eine Lichtschwächungseinrichtung 42 vor der Farbfernsehkamera 33 gesteuert. Diese Lichtschwächungseinrichtung 42 kann eine Irisblende, ein Filterrad mit abgestuften Graufiltern, ein Verlauf-Graukeil oder ein Paar gegeneinander verdrehbarer Polarisationsfilter sein. Es können aber auch verschiedene Verfahren zur Intensitätssteuerung kombiniert werden und auch ein Einschieben aller drei Filterpaare 12, 12′ ins Lampenhaus 11 zur Intensitätssteuerung herangezogen werden.

Bei der beschriebenen Belichtungsvorrichtung läuft der Belichtungsvorgang wie folgt ab:

Nach dem bei einem Farbfilm vorzugsweise automatisch erfolgten Einlegen einer Negativ-Farbaufnahme 5 in das Kopierfenster 4 wird der Meßvorgang automatisch oder durch Drücken einer Taste 53 ausgelöst, worauf bei aus dem Lampenhaus 11 ausgefahrenen Filtern 12, 12′ von der photoelektrischen Meßeinrichtung 24 Meßwertsignale für die Grundfarbendichten der ausgeleuchteten Farbaufnahme 5 an den Rechner 27 abgegeben werden. Dieser führt eine erste Rechnung aus, um anhand der Gleichungen 1) mit den für die Farbfernseheinrichtung 32 benötigten Eichfaktoren die Stellung der Filter im Lampenhaus 11 und den Einstellwert für die Lichtschwächungseinrichtung 42 vor dem Farbfernsehkameraobjektiv 41 zu bestimmen. Die berechneten Verschiebungen werden dann über die Steuereinrichtung 29 vorgenommen. Dann wird der Ablenkspiegel 39 in die Stellung I geklappt, und das Bild der Farbaufnahme 5 erscheint als Positivbild auf dem Monitor-Bildschirm 37.

Wenn das Farbfernsehbild hinsichtlich Helligkeit und/oder Farbbalance korrekturbedürftig ist, werden entsprechende Stellelemente 54 betätigt, wobei jede Betätigung sofort eine entsprechende Veränderung der Stellungen der Filter im Lampenhaus 11 bzw. der Lichtschwächungseinrichtung 42 der Farbfernsehkamera 33 bewirkt, so daß die vorgenommenen Korrekturen visuell am Bildschirm 37 verfolgt werden können. Wenn das Farbfernsehbild als gut befunden wird, wird eine zweite Taste 55 gedrückt. Die Filter im Lampenhaus 11 schieben sich in die Stellungen, die entsprechend den Gleichungen 1), aber mit den für die Belichtung des Aufzeichnungsmaterials 20 eingegebenen Bezugsfaktoren vom Rechner 27 berechnet wurden unter Berücksichtigung der betätigten Korrektur-Stellelemente 54. Der Spiegel 39 klappt in die Stellung II, so daß das Objektiv 16 frei ist, und der Verschluß 18 öffnet sich, um die Belichtung des Aufzeichnungsmaterials mit der mit Hilfe der Gleichungen 1) vom Rechner 27 bestimmten Belichtungszeit durchzuführen. Nach Ablauf der Belichtungszeit schließt sich der Verschluß 18, und das Aufzeichnungsmaterial 20 wird um eine Bildlänge vorgeschoben, worauf die Vorrichtung für einen folgenden Belichtungsvorgang bereit ist. Falls mehrere Kopien der gleichen Farbaufnahme 5 gewünscht werden, werden diese nacheinander mit den für die erste Belichtung der Kopienserie errechneten Belichtungswerten ausgeführt. Anstelle der Auslösetasten 53, 55 kann auch ein Fußschalter vorgesehen werden, der halb niedergedrückt das Bild auf dem Monitor-Bildschirm 37 zeigt und ganz niedergedrückt die Belichtung auslöst.

Für die Kontrolle der Stellungen der Filter 12, 12′ im Lampenhaus 11 können drei Methoden benutzt werden:

1) Ein Teil des Lichtes wird aus dem Lampenhaus 11 abgezweigt und mit drei photoelektrischen Meßwertgebern ausgemessen. Die Meßwertgeber erhalten vom Rechner 27 einen Sollwert vorgegeben und steuern über ein Servosystem den Einschub der Filter 12, 12′ ins Lampenhaus 11 bis der Sollwert erreicht ist.

2) Die Filtereinstellung im Lampenhaus 11 wird von den für die Ausmessung der Farbaufnahme 5 verwendeten photoelektrischen Meßwertgebern 25 kontrolliert. Der diesbezügliche Sollwert ergibt sich aus dem für 1) berechneten Sollwert unter Addition der für die Farbaufnahme gemessenen Dichtewerte.

3) Die Filter werden von einer elektromechanischen Einrichtung, z. B. von Schrittmotoren, eingeschoben, wobei vorzugsweise die Einrichtung Linearisierungsmittel, wie z. B. eine Kurvenscheibe oder ein nichtlineares Getriebe, aufweisen soll, damit bei jedem Schrittmotor die durch den Filtereinschub bewirkte Dichteänderung pro Schritt ungefähr gleich bleibt. Der Rechner 27 hält nach einem Eichvorgang, bei dem die Filter einzeln Schritt für Schritt eingeschoben werden, die gemessenen Lichtintensitäten für die einzelnen Stellungen fest. Diese Meßwerte werden vorzugsweise in logarithmischer Form in tabellarischer Anordnung gespeichert und stehen dem Rechner zur Verfügung, der sie beim Berechnen der Filtereinstellwerte verwendet. Das Einfahren der Filter kann dann durch Abzählen der Schritte vorgenommen werden. Um Abnützungserscheinungen in der mechanischen Einrichtung zu kompensieren, wird die Eichroutine von Zeit zu Zeit neu durchgeführt, z. B. zu Beginn jedes Arbeitstages.

Die Berechnung der Belichtungszeiten und der Filter-Einstellwerte kann selbstverständlich auch nach anderen als den vorstehend angegebenen Rechenvorschriften erfolgen. Es kann auch vorteilhaft sein, einen Teil der Rechnung für die Belichtung des Aufzeichnungsmaterials 20 und für die Erzeugung des Farbfernsehbildes auf dem Monitor-Bildschirm 37 gemeinsam durchzuführen und in einem zweiten Rechenvorgang getrennt die Unterschiede zu berücksichtigen, oder es kann auch vorgesehen werden, die Rechnung für eine Abbildung auf dem Aufzeichnungsmaterial 20 oder auf dem Monitor-Bildschirm 37 komplett durchzuführen und die Abweichungen der zweiten Abbildung mit einer Korrekturrechnung zu erfassen.

Die Komplexität der Datenverarbeitung bei der Belichtungsvorrichtung nach der Erfindung setzt ein digital arbeitendes Rechenwerk voraus, insbesondere dann, wenn die Ausmessung der zu kopierenden Farbaufnahmen nicht großflächig, sondern punktweise nach dem sogenannten Scanning-Verfahren erfolgt. Die digitale Steuerung von Printern ist für Hochleistungsgeräte die Regel und entspricht somit dem zugänglichen Stand der Technik. Für die digitale Steuerung der Belichtungsvorrichtung werden die Meßwertsignale der photoelektrischen Meßwertgeber 25 in Analog/Digital-Wandlern umgewandelt und dem Rechner 27 zugeführt. Dieser erhält weitere Informationen über ein Tastenfeld und aus Speichern. Die ausgehenden Datensignale steuern über in der Steuereinrichtung 29 enthaltene Schnittstellenschaltungen und Verstärker die Schrittmotoren zum Einstellen der Filter 12, 12' im Lampenhaus 11 und der Lichtschwächtungseinrichtung 42 der Farbfernsehkamera 33, ferner den Antrieb zum Verstellen des Spiegels 39, den Verschluß 18 und den Vorschub des Aufzeichnungsmaterials 20. Ein digitaler Rechner 27 erlaubt auch die Speicherung von zahlreichen Kalibrierdaten (Koeffizienten $a_{11}$ bis $a_{33}$, Unterkorrekturangaben, Slope-Faktoren usw.), die für die Verarbeitung unterschiedlicher Negativ- und Papieremulsionen bei veränderbarer Vergrößerung notwendig sind.

**Patentansprüche**

1. Verfahren zum Belichten von für Grundfarben sensibilisiertem photographischem Farb-Aufzeichnungsmaterial bei der Herstellung von Farbkopien photographischer Farbaufnahmen, wobei für jede zu kopierende Farbaufnahme automatisch aus den durch Messung ermittelten Farbdichtewerten optischer Grundfarbenauszüge der Farbaufnahme und aus zum Kopieren einer Eich-Farbaufnahme auf das Aufzeichnungsmaterial vorgegebenen Bezugs-Belichtungswerten Kopier-Belichtungswerte zum Einstellen einer steuerbaren Belichtungseinrichtung errechnet werden, dadurch gekennzeichnet, daß bei kritischen Vorlagen, d. h. solchen, deren Kopien höheren Qualitätsanforderungen genügen müssen, für eine zusätzliche Beurteilung von der zu kopierenden Farbaufnahme mit fernsehtechnischen Mitteln ein in Helligkeit und Farbbalance steuerbares Farbfernsehbild erzeugt wird und zum Steuern der fernsehtechnischen Mittel aus den ermittelten Farbdichtewerten der Farbaufnahme und vorgegebenen Eichwerten Steuerungswerte errechnet werden, durch die das erzeugte Farbfernsehbild eine getreue Wiedergabe der nach dem Entwickeln des mit den Kopier-Belichtungswerten belichteten Aufzeichnungsmaterials zu erwartenden Kopie der Farbaufnahme wird, und daß

a) bei einem in Helligkeit und Farbbalance befriedigenden Farbfernsehbild die Belichtungseinrichtung für den Belichtungsvorgang mit den errechneten Kopier-Belichtungswerten eingestellt wird und

b) bei einem unbefriedigenden Farbfernsehbild unter visueller Kontrolle die Steuerungswerte für die fernsehtechnischen Mittel soweit verändert werden, bis ein befriedigendes Farbfernsehbild entsteht und die Belichtungseinrichtung für den Belichtungsvorgang mit durch die veränderten Steuerungswerte korrigierten Kopier-Belichtungswerten eingestellt wird.

2. Verfahren nach Anspruch 1, dadurch gekennzeichnet, daß sowohl zum Belichten des Aufzeichnungsmaterials wie auch für die Erzeugung des Farbfernsehbildes die Farbabstimmung des die zu kopierende Farbaufnahme ausleuchtenden Lichtes mit einer in der Belichtungseinrichtung enthaltenen Lichtsteuereinrichtung vorgenommen wird, bei der die farbliche Zusammensetzung des ausleuchtenden Lichtes durch den Einstellungen der Lichtsteuereinrichtung zugeordnete Farbbalancewerte bestimmt ist, wobei mit der Lichtsteuereinrichtung für die Erzeugung des Farbfernsehbildes über Steuerungs-Farbbalancewerte eine erste Farbabstimmung und darauf für den Belichtungsvorgang durch Einstellen der Lichtsteuereinrichtung auf errechnete Kopier-Farbbalancewerte bzw. auf durch veränderte Steuerungs-Farbbalancewerte korrigierte Kopier-Farbbalancewerte eine zweite Farbabstimmung ausgeführt wird.

3. Verfahren nach Anspruch 1 oder 2, dadurch gekennzeichnet, daß die Helligkeit der Farbkopie durch die Belichtungszeit gesteuert und die Helligkeit des Farbfernsehbildes der zu kopierenden Farbaufnahme mit einer den fernsehtechnischen Mitteln zugeordneten optischen und/oder elektrischen Intensitäts-Steuereinrichtung vorgenommen wird, bei der die Helligkeit des Farbfernsehbildes durch den Einstellungen der Intensitäts-Steuereinrichtung(en) zugeordnete Steuerungs-Intensitätswerte bestimmt ist, und daß die Steuerung der Belichtungszeit mit einer in der Belichtungseinrichtung enthaltenen Zeitsteuerung vorgenommen wird, die für den Belichtungsvorgang auf eine errechnete Kopier-Belichtungszeit bzw. auf eine durch veränderte Steuerungs-Intensitätswerte korrigierte Kopier-Belichtungszeit eingestellt wird.

4. Verfahren nach einem der vorangehenden Ansprüche, dadurch gekennzeichnet, daß sowohl bei den Kopier-Belichtungswerten wie bei den Steuerungswerten für die Erzeugung des Farbfernsehbildes der zu kopierenden Farbaufnahme eine Slope-Korrektur vorgenommen wird, die in separaten Rechenvorgängen für die Belichtung des Aufzeichnungsmaterials und für die Erzeugung des Farbfernsehbildes errechnet wird.

5. Vorrichtung zur Durchführung des Verfahrens nach Anspruch 1, gekennzeichnet durch

i) eine automatische Belichtungseinrichtung (30), die eine verstellbare Lichtsteuereinrichtung (12, 12', 13) zum Ausleuchten einer zu kopierenden Farbaufnahme (5) mit Licht von in Hauptspektralbereichen variabler farblicher Zusammensetzung, ein Objektiv (16) zum Abbilden der ausgeleuchteten Farbaufnahme (5) auf photographisches Farb-Aufzeichnungsmaterial (20), eine verstellbare Belichtungs-Steuereinrichtung (17, 18, 19) zum Exponieren des Aufzeichnungsmaterials (20) und eine photoelektrische Meßeinrichtung (24) zur Erzeugung von elektrischen Farbdichte-Meßwertsignalen für die Dichte optischer Grundfarbenauszüge der ausgeleuchteten Farbaufnahme (5) enthält,

ii) eine Kontrolleinrichtung (31) für die visuelle Beurteilung der zu kopierenden Farbaufnahme (5), mit einer in der Grundfarbenempfindlichkeit und Gradation dem Farbaufzeichnungsmaterial (20) angepaßten Farbfernseheinrichtung (32), die eingerichtet ist, um von der ausgeleuchteten Farbaufnahme (5) ein der entwickelten Kopie auf dem Aufzeichnungsmaterial (20) entsprechendes, in der Intensität und Farbbalance durch von Hand betätigbare Stellelemente (54) veränderbares Farbfernsehbild auf einem Bildschirm (37) zu erzeugen,

iii) einen Rechner (27), der die Farbdichte-Meßwertsignale von der photoelektrischen Meßeinrichtung (24) und über die Stellelemente (54) Korrekturdaten empfängt und Zugriff zu aus der Herstellung einer Farbkopie von einer Eich-Farbaufnahme abgeleiteten Bezugs-Belichtungswerten sowie zu Eichwerten für die Farbfernseheinrichtung (32) hat und der eingerichtet ist, um daraus bei nicht betätigten Stellelementen (54) für die Belichtung des Aufzeichnungsmaterials (20) Kopier-Belichtungswerte und für die Farbfernseheinrichtung (32) Steuerungswerte zu errechnen, durch die das erzeugte Farbfernsehbild eine getreue Wiedergabe der mit den Kopier-Belichtungswerten zu erwartenden Kopie der Farbaufnahme (5) ist, und bei betätigten Stellelementen (54) entsprechend deren Einstellung korrigierte Kopier-Belichtungswerte zu errechnen, durch die die Kopie eine Wiedergabe des in Intensität und/oder Farbbalance veränderten Farbfernsehbildes wird, und

iv) Betriebs-Steuermittel (29, 53, 55), durch die für jede zu kopierende Farbaufnahme (5) die Erzeugung des Farbfernsehbildes entsprechend den Steuerungswerten und die Einstellung von Belichtungs-Steuereinrichtung (17, 18, 19) und Lichtsteuereinrichtung (12, 12', 13) auf die Kopier-Belichtungswerte bzw. korrigierten Kopier-Belichtungswerte bei nicht belichtetem Aufzeichnungsmaterial (20) erfolgt und danach der Belichtungsvorgang ausgelöst wird.

6. Vorrichtung nach Anspruch 5, dadurch gekennzeichnet, daß die Farbfernseheinrichtung (32) für konstante Farbwiedergabe eingerichtet und die Lichtsteuereinrichtung (12, 12', 13) in einer ersten Farbabstimmung für das von der zu kopierenden Farbaufnahme (5) erzeugte Farbfernsehbild durch vom Rechner (27) errechnete Steuerungs-Farbbalancewerte und durch Betätigung von Farbbalance-Stellelementen (54) und in einer zweiten Farbabstimmung für den Belichtungsvorgang durch vom Rechner (27) errechnete Kopier-Farbbalancewerte bzw. korrigierte Kopier-Farbbalancewerte einstellbar ist.

7. Vorrichtung nach Anspruch 6, dadurch gekennzeichnet, daß zur Kontrolle der Stabilität der Farbfernseheinrichtung (32) eine Prüfeinrichtung (43 . . . 52) vorhanden ist, die in zeitlichen Abständen ein von einer stabilisierten Hilfslichtquelle (45, 46) ausgeleuchtetes Testbild (44) für die Wiedergabe auf dem Bildschirm (37) der Farbfernseheinrichtung (32) einblendet und von Hand bedienbare Stellglieder (52) zum Nachstellen von Betriebswerten der Farbfernseheinrichtung (32) entsprechend visuell subjektiv oder objektiv über ein photoelektrisches Meßsystem (47, 48, 49, 51) erfaßten Veränderungen des Test-Farbfernsehbildes (50) oder durch das photoelektrische Meßsystem gesteuerte Regeleinrichtung zum automatischen Nachführen der Betriebswerte auf vorgegebene Sollwerte enthält.

8. Vorrichtung nach einem der Ansprüche 5 bis 7, dadurch gekennzeichnet, daß die Helligkeit des von der zu kopierenden Farbaufnahme (5) erzeugten Farbfernsehbildes durch eine die Beleuchtungsstärke des in der Farbfernseheinrichtung (32) zur Wiedergabe auf dem Bildschirm (37) abgetasteten Farbaufnahme-Bildes ändernde verstellbare optische Intensitäts-Steuereinrichtung und/oder durch eine in dem Steuergerät (34) der Farbfernseheinrichtung (32) vorhandene verstellbare elektrische Intensitäts-Steuereinrichtung gesteuert ist, wobei die optische und/oder elektrische Intensitäts-Steuereinrichtung durch von dem Rechner (27) errechnete Steuerungs-Intensitätswerte einstellbar und durch Betätigung von Helligkeits-Stellelementen (54) verstellbar ist.

9. Vorrichtung nach Anspruch 8, dadurch gekennzeichnet, daß die optische Intensitäts-Steuereinrichtung aus einer verstellbaren Lichtschwächungseinrichtung (42) besteht, die in den von der Farbfernseheinrichtung (32) für die Erzeugung des Farbfernsehbildes von der zu kopierenden Farbaufnahme (5) aufgenommenen Strahlengang eingesetzt ist.

10. Vorrichtung nach einem der Ansprüche 5 bis 9, dadurch gekennzeichnet, daß dem Objektiv (16) zum Belichten des Farb-Aufzeichnungsmaterials ein in den Öffnungszeiten durch vom Rechner (27) errechnete Kopier-Belichtungszeitwerte bzw. errechnete korrigierte Kopier-Belichtungszeitwerte gesteuerter Verschluß (18, 19) zugeordnet ist.

11. Vorrichtung nach Anspruch 10, dadurch gekennzeichnet, daß zum Abbilden der ausgeleuchteten Farbaufnahme (5) auf dem Aufzeichnungsmaterial (20) und auf dem Bildschirm (37) der Farbfernseheinrichtung (32) zwischen Farbaufnahme (5) und Verschluß (18) ein teildurchlässiger Spiegel fest angeordnet ist, dessen Extinktions- bzw. Reflexionswerte in den Hauptspektralbereichen des die Farbaufnahme (5) ausleuchtenden Lichtes bei der Bestimmung der Kopier-Belichtungswerte und korrigierten Kopier-Belichtungswerte bzw. der Steuerungswerte für die Farbfernseheinrichtung (32) berücksichtigt sind.

12. Vorrichtung nach einem der Ansprüche 5 bis 10, dadurch gekennzeichnet, daß zum Abbilden der ausgeleuchteten Farbaufnahme (5) auf dem Aufzeichnungsmaterial (20) und auf dem Bildschirm (37) der Farbfernseheinrichtung (32) eine verstellbare Strahlenumlenkeinrichtung (39, 40) vorhanden ist, mit der für jeden Belichtungszyklus ein Umlenkspiegel (39) so in den Abbildungsstrahlengang (38) eingesetzt wird, daß die Farbaufnahme (5) zuerst für eine Beurteilung auf dem Bildschirm (37) der Farbfernseheinrichtung (32) und dann zum Belichten auf dem Aufzeichnungsmaterial (20) abgebildet wird.

13. Vorrichtung nach einem der Ansprüche 5 bis 12, dadurch gekennzeichnet, daß für eine Bildausschnittsvergrößerung auf dem Aufzeichnungsmaterial (20) die Abbildungsoptik der Belichtungseinrichtung (30) und der Farbfernseheinrichtung (32) verstellbar und mittels mechanischer oder elektrischer Kupplungsmittel die Verstellungen so synchronisiert sind, daß auf dem Bildschirm (37) der Farbfernseheinrichtung (32) der auf dem Aufzeichnungsmaterial (20) zur Abbildung gelangende Bildausschnitt der Farbaufnahme (5) abgebildet wird.

14. Vorrichtung nach einem der Ansprüche 5 bis 13, dadurch gekennzeichnet, daß der Rechner (27) für eine Slope-Korrektur Zugriff zu empirisch ermittelten Slope-Korrekturdaten hat und eingerichtet ist, um die Slope-Korrekturrechnung für die Belichtung des Aufzeichnungsmaterials (20) und für die Erzeugung des Farbfernsehbildes der zu kopierenden Farbaufnahme (5) in getrennten Rechenvorgängen durchzuführen.

## Claims

1. Method of exposure of photographic colour recording material sensitized for primary colours in the making of colour copies of colour photographs, in connection with which, for each colour photograph to be copied, copying exposure values are automatically calculated for the setting of a controllable exposure arrangement from the colour density values — arrived at by calculation — of the optical primary colour separations of the colour photograph, and from the reference exposure values predetermined for the copying of a standard colour photograph onto the recording material, characterised in that, in the case of critical originals, i.e. those the copies of which must satisfy high quality requirements, for an additional appraisal of the colour photograph to be copied a colour television picture controllable as regards brightness and colour balance is produced by television means, and for the control of the television means control values are calculated from the colour density values of the colour photograph and from the predetermined standard values, through which standard values the colour television picture produced becomes a true reproduction of the copy of the colour photograph to be expected after the development of the recording material exposed with the copying exposure values, and in that

a) for a colour television picture satisfactory as regards brightness and colour balance the exposure arrangement for the exposure process is set with the copying exposure values arrived at, and

b) for an unsatisfactory colour television picture, while carrying out a visual control, the control values for the television means are modified to such an extent until a satisfactory colour television picture is obtained and the exposure arrangement for the exposure process is set by means of the copying exposure values corrected on the basis of the altered control values.

2. A method according to Claim 1, characterised in that both for the exposure of the recording material and for the production of the colour television picture the colour matching is effected of the light illuminating the colour photograph to be copied with one light control device contained in the exposure arrangement in which the colour composition of the illuminating light is determined by means of the adjustments of the colour balance values associated with the light control device, there being effected with the light control device a first colour matching for the production of the colour television picture through control colour balance values, and then a second colour matching for the exposure process by means of the adjustment of the light control device to calculated copying colour balance values or to copying colour balance values corrected by means of modified control colour balance values.

3. A method according to Claims 1 or 2, characterised in that the brightness of the colour copy is controlled by the exposure time and the brightness of the colour television picture of the colour photograph to be copied is effected with an optical and/or electric intensity control arrangement associated with the television means, in which arrangement the brightness of the colour television picture is determined by the settings of the control intensity values associated with the intensity control device(s), and in that the control of the exposure time is effected with a time control contained in the exposure arrangement, said time control being set for the exposure process to a copying exposure time arrived at, or to a copying exposure time corrected by means of modified control intensity values.

4. A method according to one of the foregoing claims characterised in that as regards both the copying exposure times and the control values for the production of the colour television picture of the colour photograph to be copied a slope correction is effected which is arrived at in separate calculation processes for the exposure of the recording material and for the production of the colour television picture.

5. An arrangement for carrying out the method according to Claim 1, characterised by

i) an automatic exposure arrangement (30) which contains an adjustable light control device (12, 12', 13) for illuminating a colour photograph (5) to be copied with light of colour composition variable in main regions of the spectrum, a lens (16) for forming the illuminated colour photograph (5) on photographic colour recording material (20), an adjustable exposure control device (17, 18, 19) for exposing the recording material (20) and a photo-electric measuring device (24) for the production of electric colour density measuring value signals for the density of optical primary colour separations of the illuminated colour photograph (5).

ii) a control arrangement (31) for the visual appraisal of the colour photograph (5) to be copied with a colour television arrangement (32) which is suited in terms of primary colour sensitivity and graduation to the colour recording material (20), and is arranged to produce on a picture screen (37) a colour television picture corresponding to the developed copy on the recording material (20), modifiable in intensity and colour balance by manually actuatable adjusting elements (54);

iii) a computer (27) which receives colour density measuring value signals from the photo-electric measuring device (24) and correction data via the adjusting elements (54) and has access to reference exposure values derived from the production of a colour copy from a standard colour photograph as well as to standard values for the colour television arrangement (32) and which is arranged to calculate from those, on the non-actuation of the adjusting elements (54) for the exposure of the recording material (20), copying exposure values, and for the colour television arrangement (32), control values, as a result of which values the colour television picture produced is a true reproduction of the copy of the colour photograph (5) to be expected with the copying exposure values, and on the actuation of the adjusting elements (54) copying exposure values corrected correspondingly to their adjustment, as a result of which the copy is a reproduction of the colour television picture adjusted in intensity and/or colour balance, and

iv) operational control means (29, 53, 55) by means of which, for each colour photograph to be copied (5) the production is effected of the colour television picture corresponding to the control values, and adjustment is made of the exposure control device (17, 18, 19) and of the light control arrangement (12, 12', 13) to the copying exposure values or to the corrected copying exposure values when the recording material (20) is not exposed, and thereafter the exposure process is set off.

6. An arrangement according to Claim 5, characterised in that the colour television arrangement (32) is arranged for constant colour reproduction, and the colour control device (12, 12', 13) is adjustable in a first colour balance for the colour television picture produced from the colour photograph (5) to be copied by means of control colour balance values computed by the computer (27) and by the actuation of colour balance adjustment elements (54), and in a second colour balance for the exposure process by means of copying colour balance values or corrected colour balance values computed by the computer (27).

10

7. An arrangement according to Claim 6, characterised in that for the control of the stability of the colour television arrangement (32) a testing arrangement (43 . . . 52) is provided which in time intervals focuses a test picture (44) illuminated by a stabilised auxiliary light source (45, 46) for the reproduction on the screen (37) of the colour television arrangement (32) and contains manually actuatable adjustment elements (52) for setting operational values of the colour television arrangement (32) correspondingly to modifications of the test colour television picture (50) detected visually subjectively or objectively by means of a photo-electric measuring system (47, 48, 49, 51), or an adjustment device controlled by the photo-electric measuring system for the automatic tracking of the operational values on predetermined desired values.

8. An arrangement according to one of Claims 5 to 7, characterised in that the brightness of the colour television picture obtained from the colour photograph (5) to be copied is controlled by means of an adjustable optical intensity control device modifying the illumination intensity of the colour photograph image detected in the colour television arrangement (32) for reproduction on the screen (37), and/or by means of an adjustable electric intensity control device provided in the control apparatus (34) of the colour television arrangement (32), the optical and/or electric intensity control device able to be set by control intensity values computed by the computer (27) and to be adjusted by the actuation of brightness adjusting elements (54).

9. An arrangement according to Claim 8, characterised in that the optical intensity control device consists in an adjustable light dimming device (42) which is set in the path of the rays taken up by the colour television arrangement (32) for the production of the colour television picture of the colour photograph (5) to be copied.

10. An arrangement according to one of Claims 5 to 9, characterised in that a shutter (18, 19) controlled as regards opening times by copying illumination time values or corrected copying illumination time values computed by the computer (27) is associated with the lens (16) for the illumination of the colour recording material.

11. An arrangement according to Claim 10, characterised in that for forming the illuminated colour photograph (5) on the recording material (20) and on the screen (37) of the colour television arrangement (32) a partly transparent mirror is solidly mounted between colour photograph (5) and shutter (18), the extinction or relection values of said mirror in the main spectral ranges of the light illuminating the colour photograph (5) being taken into consideration in the determination of the copying illumination values and corrected copying illumination values or the control values for the colour television arrangement (32).

12. An arrangement according to one of Claims 5 to 10, characterised in that for forming the illuminated colour photograph (5) on the recording material (20) and on the screen (37) of the colour television arrangement (32) an adjustable ray deflection device (39, 40) is provided, with which, for each illumination cycle, a deflecting mirror (39) is arranged in such a manner in the formation ray path (38) that the colour photograph image (5) is formed firstly on the screen (37) of the colour television arrangement (32) for appraisal, and then for illumination of the recording material (20).

13. An arrangement according to one of Claims 5 to 12, characterised in that for the enlargement of a portion of the image on the recording material (20) the image formation optical system of the illumination device (30) and of the colour television arrangement (32) are adjustable and, by means of mechanical or electric coupling means, the settings are so synchronised that the image portion of the colour photograph (5) reaching the recording material (20) for formation is formed on the screen (37) of the colour television arrangement (32).

14. An arrangement according to one of Claims 5 to 13, characterised in that the computer (27) for slope correction has access to empirically obtained slope correction data and is arranged to carry out in separate computing operations the slope correction computing for the illumination of the recording material (20) and for the production of the colour television picture of the colour photograph (5) to be copied.

**Revendications**

1. Procédé d'exposition d'un matériau d'enregistrement photographique en couleur sensibilisé aux couleurs primaires pour la fabrication de reproductions photographiques en couleur d'épreuves en couleur du type où, pour chaque reproduction couleur à tirer on calcule automatiquement à partir de valeurs de pureté colorimétrique obtenues par mesure, les séparations optiques des couleurs primaires de la reproduction couleur et, à partir des valeurs prédéterminées d'exposition de référence pour le tirage d'une épreuve couleur de vérification sur le matériau d'enregistrement, les valeurs d'exposition de tirage pour l'ajustement d'un dispositif réglable d'exposition, caractérisé en ce que pour des modèles critiques, c'est-à-dire ceux dont les tirages doivent satisfaire à des conditions de haute qualité, on produit, pour une évaluation supplémentaire, une image de télévision en couleur dont la luminosité et l'équilibre des couleurs peuvent être réglés, à partir de la reproduction couleur à tirer, par des moyens techniques de télévision, et on calcule des valeurs de commande ou de réglage, pour la commande des moyens techniques de télévision à partir des valeurs obtenues de pureté colorimétrique de la reproduction couleur et des valeurs prédéterminées de vérification, par lesquelles l'image produite de télévision en couleur forme une reproduction fidèle de l'épreuve de la reproduction couleur à laquelle on peut s'attendre après développement du matériau d'enregistrement exposé selon les valeurs d'exposition de la machine à tirer et en ce que

a)   dans le cas d'une image de télévision satisfaisante du point de vue luminosité et équilibre des couleurs, le dispositif d'exposition est réglé, pour le processus d'exposition, aux valeurs calculées d'exposition au tirage et

b)   dans le cas d'une image non satisfaisante de télévision en couleur les valeurs de commande ou de réglage des moyens techniques de télévision sont modifiées, avec contrôle visuel, jusqu'à ce qu'il en résulte une image satisfaisante de télévision en couleur et le dispositif d'exposition est réglé pour le processus d'exposition avec les valeurs d'exposition de la machine à tirer corrigées selon les valeurs modifiées.

2. Procédé selon la revendication 1 caractérisé en ce qu'aussi bien pour l'exposition du matériau d'enregistrement que pour la production de l'image de télévision en couleur, on entreprend l'adaptation de couleur de la lumière éclairant la reproduction couleur à tirer avec un dispositif de réglage de la lumière contenu dans le dispositif d'exposition, où la composition des couleurs de la lumière d'éclairement est déterminée par les valeurs d'équilibre des couleurs attribuées aux ajustements du dispositif de réglage de la lumière, ainsi on accomplit, avec le dispositif de réglage de la lumière, pour la production de l'image de télévision en couleur, au moyen des valeurs d'équilibre des couleurs de commande ou de réglage, une première adaptation des couleurs et ensuite, pour le processus d'exposition, par ajustement du dispositif de réglage de la lumière sur les valeurs calculées d'équilibre des couleurs de la machine à tirer ou respectivement sur les valeurs corrigées d'équilibre des couleurs de la machine à tirer par la modification des valeurs d'équilibre des couleurs de réglage, une deuxième adaptation des couleurs.

3. Procédé selon la revendication 1 ou 2 caractérisé en ce que la luminosité de l'épreuve en couleur est réglée par la durée d'exposition et la luminosité de l'image de télévision en couleur de la reproduction couleur à tirer est entreprise avec un dispositif optique et/ou électrique de réglage de l'intensité adjoint aux moyens techniques de télévision, la luminosité de l'image couleur de télévision étant déterminée par l'ajustement des valeurs d'intensité de réglage affectées au ou aux dispositifs de réglage de l'intensité, et en ce que le réglage de la durée d'exposition est entrepris au moyen d'un temporisateur contenu dans le dispositif d'exposition, lequel est ajusté pour le processus d'exposition, à un temps calculé d'exposition de la machine à tirer où respectivement à un temps d'exposition de la machine à tirer, calculé selon les valeurs modifiées d'intensité de réglage.

4. Procédé selon l'une quelconque des revendications précédentes caractérisé en ce que l'on entreprend, aussi bien pour les valeurs d'exposition de la machine à tirer que pour les valeurs de réglage pour la production de l'image de télévision en couleur de la reproduction en couleur à tirer, une correction de pente, qui est calculée par des processus séparés de calcul pour l'exposition du matériau d'enregistrement et pour la production de l'image de télévision en couleur.

5. Dispositif pour la mise en œuvre du procédé selon la revendication 1, caractérisé par

i)   un dispositif automatique d'exposition (30) qui contient un dispositif ajustable de réglage d'éclairement (12, 12', 13) pour l'éclairement d'une reproduction couleur (5) à tirer avec de la lumière d'une composition des couleurs variable dans le domaine spectral principal, un objectif (16) pour former l'image de la reproduction couleur (5) éclairée sur un matériau photographique d'enregistrement en couleur (20), un dispositif ajustable de réglage d'exposition (17, 18, 19) pour l'exposition du matériau d'enregistrement (20) et un dispositif photoélectrique de mesure (24) pour la production de signaux électriques de mesure de la pureté colorimétrique pour la pureté de la séparation optique des couleurs de base de la reproduction couleur éclairée (5),

ii)   un dispositif de contrôle (31) pour l'évaluation visuelle de la reproduction couleur (5) à tirer, avec un dispositif de télévision en couleur (32) adapté à la sensibilité aux couleurs primaires et à la gradation du matériau d'enregistrement en couleur (20) qui est agencé pour produire, à partir de la reproduction couleur éclairée (5), sur un écran (37), une image de télévision en couleur correspondant au tirage développé sur le matériau d'enregistrement (20), et pouvant être modifiée par l'intensité et l'équilibre des couleurs au moyen d'éléments de réglage (54) pouvant être actionnés à la main,

iii)   un calculateur (27) qui reçoit les signaux de mesure de pureté colorimétrique du dispositif photoélectrique de mesure (24) et par les éléments de réglage (54) et a accès aux valeurs d'exposition de référence dérivées de la production d'une épreuve couleur d'une reproduction couleur de vérification ainsi qu'aux valeurs de vérification pour le dispositif de télévision en couleur (32) et qui est agencé pour calculer, à partir de cela, alors que les éléments de réglage (54) ne sont pas actionnés, des valeurs d'exposition des tirages pour l'exposition du matériau d'enregistrement (20) et des valeurs de réglage pour le dispositif de télévision (32), par lesquelles l'image produite de télévision en couleur est une reproduction fidèle de l'épreuve attendue de la reproduction en couleur (5) avec les valeurs d'exposition de la machine à copier, et lorsque les éléments de réglage (54) sont actionnés, ils calculent selon leur ajustement, des valeurs corrigées d'exposition de tirage par lesquelles l'épreuve est une reproduction de l'image de télévision en couleur dont l'intensité et/ou l'équilibre des couleurs est modifié, et

iv) un moyen de commande de fonctionnement (29, 53, 55) par lequel, pour chaque reproduction en couleur (5) à tirer, il y a production de l'image de télévision en couleur selon les valeurs de réglage et l'ajustement du dispositif de réglage de l'exposition (17, 18, 19) et du dispositif de réglage de la lumière (12, 12', 13) selon les valeurs d'exposition au tirage ou respectivement les valeurs corrigées d'exposition au tirage alors que le matériau d'enregistrement (20) n'est pas exposé et ensuite le processus d'exposition est déclenché.

6. Dispositif selon la revendication 5 caractérisé en ce que le dispositif formant télévision en couleur (32) est agencé pour un rendu constant des couleurs et le dispositif de réglage de la lumière (12, 12', 13) peut être ajusté, dans une première adaptation des couleurs, pour l'image de télévision en couleur produite par la reproduction en couleur (5) à tirer, par les valeurs d'équilibre des couleurs de réglage calculées par le calculateur (27) et par mise en action des éléments de réglage de l'équilibre des couleurs (54), et dans une seconde adaptation des couleurs, pour le processus d'exposition, par les valeurs d'équilibre des couleurs de tirage calculées par le calculateur ou respectivement les valeurs corrigées d'équilibre des couleurs de tirage.

7. Dispositif selon la revendication 6 caractérisé en ce que pour le contrôle de la stabilité du dispositif de télévision en couleur (32), un dispositif d'examen (43 . . . 52) est prévu, qui superpose, à certains intervalles de temps, une image test (44) éclairée par une source auxiliaire stabilisée de lumière (45, 46) pour le rendu sur l'écran (37) du dispositif de télévision en couleur (32) et qui contient des organes de réglage pouvant être actionnés à la main (52) pour la mise au point de valeurs de fonctionnement du dispositif de télévision en couleur (32) selon des modifications visuelles subjectives et objectives produites au moyen d'un système photoélectrique de mesure (47, 48, 49, 51) de l'image de télévision en couleur de test (50) ou par le dispositif de régulation commandé par le système photoélectrique de mesure pour adapter automatiquement les valeurs de fonctionnement à des valeurs prédéterminées de consigne.

8. Dispositif selon l'une quelconque des revendications 5 à 7 caractérisé en ce que la luminosité de l'image de télévision en couleur produite à partir de la reproduction en couleur à tirer (5) est réglée par un dispositif optique de réglage de l'intensité modifiant la force de l'exposition de l'image de reproduction en couleur explorée dans l'appareil de télévision en couleur (32) pour une reproduction sur l'écran (37) et/ou par un dispositif électrique de réglage de l'intensité pouvant être ajusté, présent dans l'appareil de commande (34) du dispositif de télévision en couleur (32), le dispositif optique et/ou électrique de réglage de l'intensité pouvant être ajusté par les valeurs d'intensité de réglage calculées dans le calculateur (27) et pouvant être ajusté par mise en action des éléments de réglage (54) de la luminosité.

9. Dispositif selon la revendication 8 caractérisé en ce que le dispositif optique de réglage de l'intensité se compose d'un dispositif réglable d'atténuation de la lumière (42) qui est disposé dans la trajectoire des rayons reçus par la reproduction en couleur à tirer (5) en provenance du dispositif de télévision en couleur (32) pour la production de l'image de télévision en couleur.

10. Dispositif selon l'une quelconque des revendications 5 à 9 caractérisé en ce qu'à l'objectif (16) pour l'exposition du matériau d'enregistrement en couleur est adjoint un obturateur (18, 19) commandé pendant les temps d'ouverture, par des valeurs de temps d'exposition de tirage ou respectivement des valeurs corrigées de temps d'exposition de tirage calculées par le calculateur.

11. Dispositif selon la revendication 10 caractérisé en ce que pour la formation de l'image de la reproduction en couleur (5) éclairée, sur le matériau d'enregistrement (20) et sur l'écran (37) du dispositif de télévision en couleur (32) est disposé solidement, entre la reproduction en couleur (5) et l'obturateur (18), un miroir semi-argenté dont les coéfficients d'extinction ou respectivement de reflexion sont pris en considération dans le domaine spectral principal de la lumière éclairant la reproduction en couleur (5) lors de la détermination des valeurs d'exposition au tirage et des valeurs corrigées d'exposition au tirage ou respectivement des valeurs de réglage pour le dispositif de télévision en couleur (32).

12. Dispositif selon l'une quelconque des revendications 5 à 10 caractérisé en ce que pour la formation d'une image de la reproduction éclairée en couleur (5) sur le matériau d'enregistrement (22) et sur l'écran (37) du dispositif de télévision en couleur (32), est prévu un dispositif réglable (39, 40) de coudage des rayons avec lequel on utilise, pour chaque cycle d'exposition, un miroir réflecteur (39) dans la trajectoire des rayons de formation d'une image (38) de façon que la reproduction en couleur (5) soit d'abord produite pour une évaluation sur l'écran (37) du dispositif de télévision en couleur (32) puis pour l'exposition sur le matériau d'enregistrement (20).

13. Dispositif selon l'une quelconque des revendications 5 à 12 caractérisé en ce que pour un agrandissement d'une coupe de l'image sur le matériau d'enregistrement, le circuit optique du dispositif d'exposition (30) et le dispositif de télévision en couleur (32) sont synchronisés de manière réglable et par des moyens mécaniques ou électriques d'accouplement de façon que sur l'écran (37)

13

du dispositif de télévision en couleur (32) soit formée la coupe de l'image de la reproduction en couleur (5) arrivant sur le matériau d'enregistrement (20) pour la formation de l'image.

14. Dispositif selon l'une quelconque des revendications 5 à 13 caractérisé en ce que le calculateur (27) a accès, pour une correction de la pente, à des données de correction de pente produites empiriquement et est agencé de façon que le calcul de correction de la pente soit accompli pour l'exposition du matériau d'enregistrement (20) et pour la production de l'image de télévision en couleur de la reproduction en couleur à tirer (20) dans des processus séparés de calcul.